(19) Europäisches Patentamt
European Patent Office
Office européen des brevets

(11) **EP 0 681 168 B1**

## (12) EUROPEAN PATENT SPECIFICATION

(45) Date of publication and mention
of the grant of the patent:
**10.11.1999 Bulletin 1999/45**

(51) Int Cl.[6]: **G01L 11/04**, G01M 3/24,
G01L 9/00

(21) Application number: **95301591.4**

(22) Date of filing: **10.03.1995**

(54) **Method and apparatus for determining the internal pressure of a sealed container**

Verfahren und Apparat zur Erfassung des Innendruckes eines verschlossenen Behälters

Procédé et appareil pour déterminer la pression interne d'un récipient fermé

(84) Designated Contracting States:
**BE DE ES FR GB IE IT LU NL SE**

(30) Priority: **04.05.1994 GB 9408821**

(43) Date of publication of application:
**08.11.1995 Bulletin 1995/45**

(73) Proprietor: **The BOC Group plc**
**Windlesham Surrey GU20 6HJ (GB)**

(72) Inventor: **Van Manen, Peter**
**Surrey, KT4 7SY (GB)**

(74) Representative: **Gough, Peter et al**
**c/o THE BOC GROUP PLC**
**Patent Department**
**Chertsey Road**
**Windlesham Surrey GU20 6HJ (GB)**

(56) References cited:
**US-A- 3 802 252**      **US-A- 4 399 514**
**US-A- 5 144 838**      **US-A- 5 353 631**

# EP 0 681 168 B1

## Description

The present invention relates to a method and apparatus for determining the internal pressure of a sealed container, and is more particularly concerned with a method and apparatus for non-destructively determining the internal pressure of a sealed gas bottle by analysing the vibratory mode thereof.

Presently known methods of determining the internal pressure of a gas bottle include the use of a pressure gauge. The gauge is connected to the outlet of the bottle prior to the operation of a value which allows the gauge to communicate directly with the contents of the bottle and respond to the pressure therein. Such gauges, whilst providing a high degree of accuracy, when correctly fitted by a skilled operator, do not lend themselves to the speedy operation. This can cause undesirable delays when an operator is checking a large number of bottles. In fact, the accuracy of such gauges can be an immaterial advantage when, for example, it is merely desired to check whether the bottle is substantially full or substantially empty, thereby to avoid an empty bottle being despatched to a customer.

There therefore exists a requirement for a method of and apparatus for determining the internal pressure of a sealed container, such as a bottle, which is comparatively quick to use and which does not rely on the skill of the operator to ensure an accurate measurement. An additional requirement which the present invention aims to achieve is to provide an apparatus which is easily accommodated in the relatively small gap between closely packed bottles.

US-A-4399514 discloses a non-destructive method for inspecting the internal pressure of sealed cylindrical containers in which a magnetic impulsive force is applied to the end surface of the cylindrical container and the resulting vibrations detected. Derivation of the detected fundamental and first harmonic frequencies of vibration from predetermined values is used to judge the integrity of the sealed container.

Accordingly, the present invention provides a non-invasive method of a non-invasive method of determining the pressure within a sealed, substantially cylindrical container wherein the method comprises the steps of:

(a) inputting data relating to the container into a memory;

(b) Striking the container towards the mid portion of the cylindrical container in a controlled manner so as to excite the fundamental radial-circumferential mode of vibration $f_1$ and the first harmonic thereof $f_2$;

(c) detecting the vibration resulting from the striking of said container;

(d) producing a frequency spectrum of the detected vibration;

(e) isolating the frequency of the fundamental mode $f_1$ and the first harmonic $f_2$ from the frequency spectrum; characterised in that the method further comprises the steps of:

(f) calculating the value of variable A from the following equation

$$A = (f_2 - f_1)/2.8;$$

(g) calculating the thickness t of the container from the following equation

$$A = C_1 x 0.49 \sqrt{\left(\frac{Et^2}{\rho d^4}\right)} \; ;$$

(h) calculating the value of variable B from the following equation

$$B = C_2 x \frac{0.05d}{t^2} \sqrt{\left(\frac{1}{\rho E}\right)} \; ;$$

and then

(i) calculating the pressure P within the container from equation

$$P = (f_1 - A)/B$$

in which,

t = the thickness of the container wall
d = the diameter of the container
E = the Elastic Modulus of the container
r = the density of the container material
$C_1$ and $C_2$ are correction factors to correct for the effect the ends of the container has on the calculation.

It will be appreciated that all the above mentioned calculations may be made by a simple calculating device and that, as a result of this, and the fact that the method avoids the problems associated with pressure gauges. it will be possible for an unskilled operator to undertake pressure measurement at comparatively high speed.
The present invention further provides an apparatus for the non-invasive determination of pressure within a sealed. substantially cylindrical container, said apparatus comprising:

(a) means for receiving basic information relating to the container;

(b) striking means for striking the mid point of the container in a controlled manner so as to excite the fundamental radial-circumferential mode of vibration $f_1$ and the first harmonic thereof $f_2$;

(c) detecting means for detecting vibration resulting from the striking of said container;

(d) isolating means for isolating the values of $f_1$ and $f_2$; and

(e) calculating means for calculating the internal pressure P from the isolated values of $f_1$ and $f_2$ and the container information;

characterised in that the calculating means (12c) calculates the values of A, t, B and P from the following equations:

$$A = (f_2 - f_1)/2.8$$

$$A = C_1 x 0.49 \sqrt{\left(\frac{Et^2}{\rho d^4}\right)}$$

$$B = C_2 x \frac{0.05d}{t^2} \sqrt{\left(\frac{1}{\rho E}\right)}$$

$$P = (f_1 - A)/B.$$

Where

A and B are correction factors
t = the thickness of the container wall
d = the diameter of the container
E = the Elastic Modulus of the container
r = the density of the container material

$C_1$ and $C_2$ are correction factors to correct for the effect the ends of the container has on the calculation.

The present invention will now be more particularly described by way of example only with reference to the following drawings, in which;

Figure 1 is a side view of an apparatus according to the present invention shown attached to a bottle;

Figures 2 and 3 are graphs of received vibration signals;

Figure 4 is a graph of vibration frequency against pressure for a bottle at various pressures; and

Figure 5 is a flow diagram relating to the pressure calculation software.

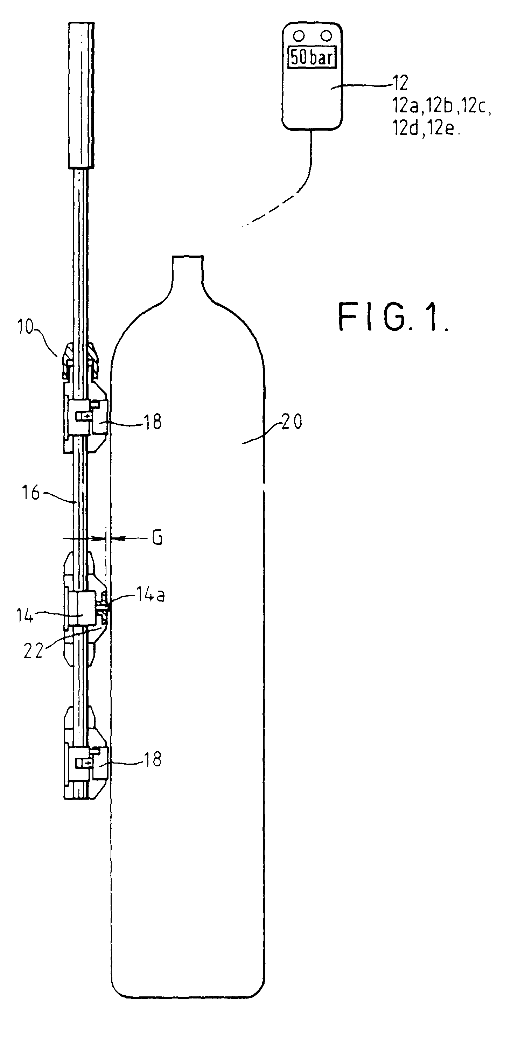

Referring to Figure 1, the apparatus 10 comprises a data storage and processing device such as, for example, a hand held data acquisition unit 12 to be described in detail below and a solenoid or manually activated striker 14. The striker 14 may be mounted on a support member 16 in the form of an elongate member or rod having one or more magnets 18 for securing the rod support member 16 to a bottle 20 to be tested. For convenience, on of said magnets may be slidable up and down said support member 16 so as to facilitate the accommodation of various sizes of bottle 20. The striker 14 is mounted relative to said support member 16 and magnets 18 so as to leave a gap G between the end 14a of the striker 14 and the bottle when said striker is in a retracted position. A signal detector in the form of accelerometer 22 is provided for detecting vibration within the bottle set up as a result of the operation of striker 14. The accelerometer is linked to the data acquisition unit 12 for the transfer of data thereto.

The data acquisition unit (DA Unit) 12 includes an analogue to digital converter 12a, a memory 12b to store captured and processed data, a processor 12c for processing data in a manner to be described later herein, a simple keypad and display 12d and a power supply 12e. The DA Unit 12 may further include a capability for storing results and/or down-loading data over a serial communications link (not shown). Typically, the signal processing capability will include filtering by a low-pass digital filter with cut off set to about 3.5KHz and means for conducting a Fast Fourier Transform on the data.

The present invention being particularly slim lends itself to insertion into the small gaps formed between closely packed cylindrical bottles. In which position the striker 14 is located towards the mid portion of the bottle so as to minimise the effects of the bottle ends on the pressure determining method.

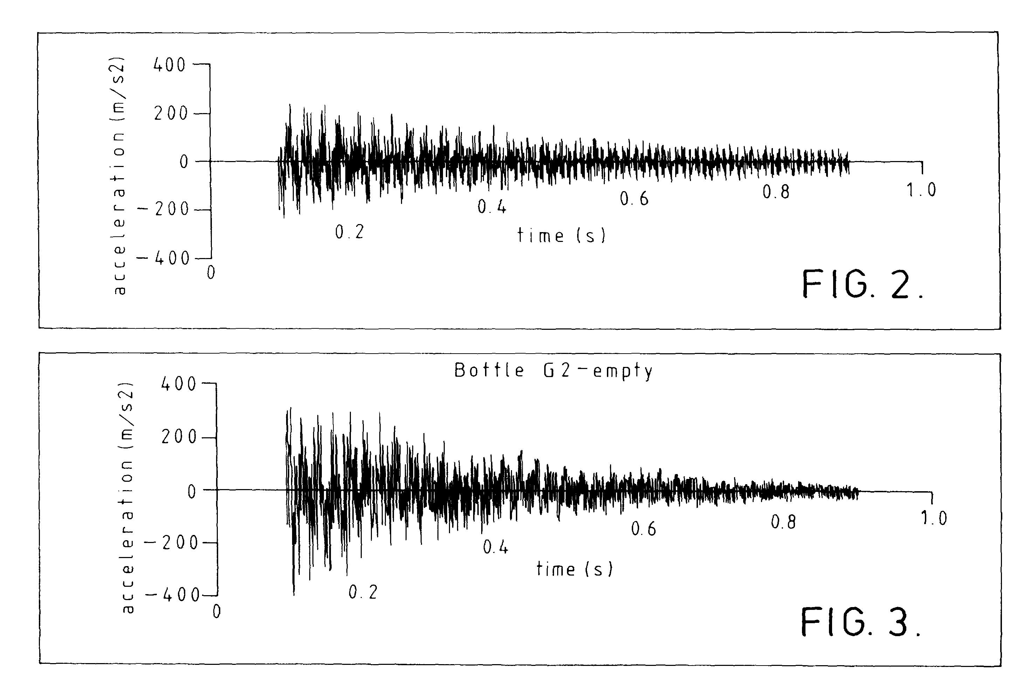

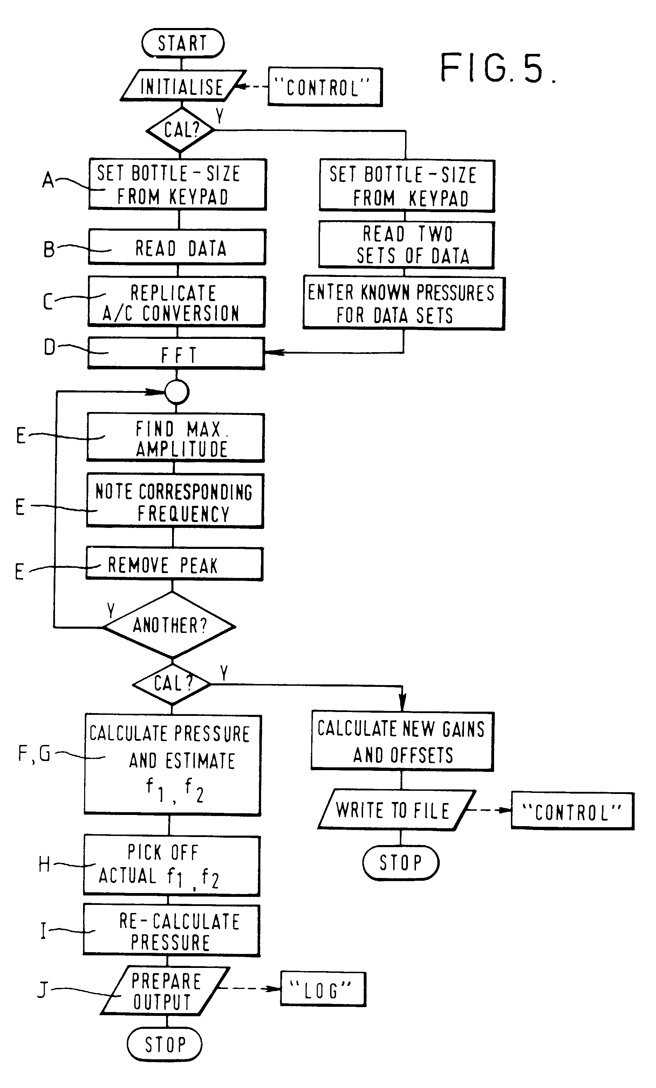

Referring now to Figures 1 to 5 the present apparatus 10 is operated by firstly selecting the appropriate bottle size from a range stored in the memory or inputting data manually thereby to access the basic data relating thereto (step A); striking the bottle 20 with striker 14 so as to excite at least the fundamental radial circumferential mode of vibration $f_1$ and the first harmonic $f_2$ thereof; detecting the vibration (Fig. 2, 3) within the bottle 20 through accelerometer 22 (step B); conducting an analogue-to-digital conversion to between 8 and 12 bit resolution (step C) and presenting the converted signal to the DA Unit 12 for processing. Processing includes the steps of cleaning up the received signal by means of, for example, a fast fourier transformation technique (step D) and then isolating the values of $f_1$ and $f_2$. Isolation of $f_1$ and $f_2$ may be conducted by selecting the ten most pronounced resonance peaks from the cleaned up signal (step E) and searching for and identifying those peaks that correspond to the $f_1$ and $f_2$ peaks. Preferably the search and identify routine involves the following steps:

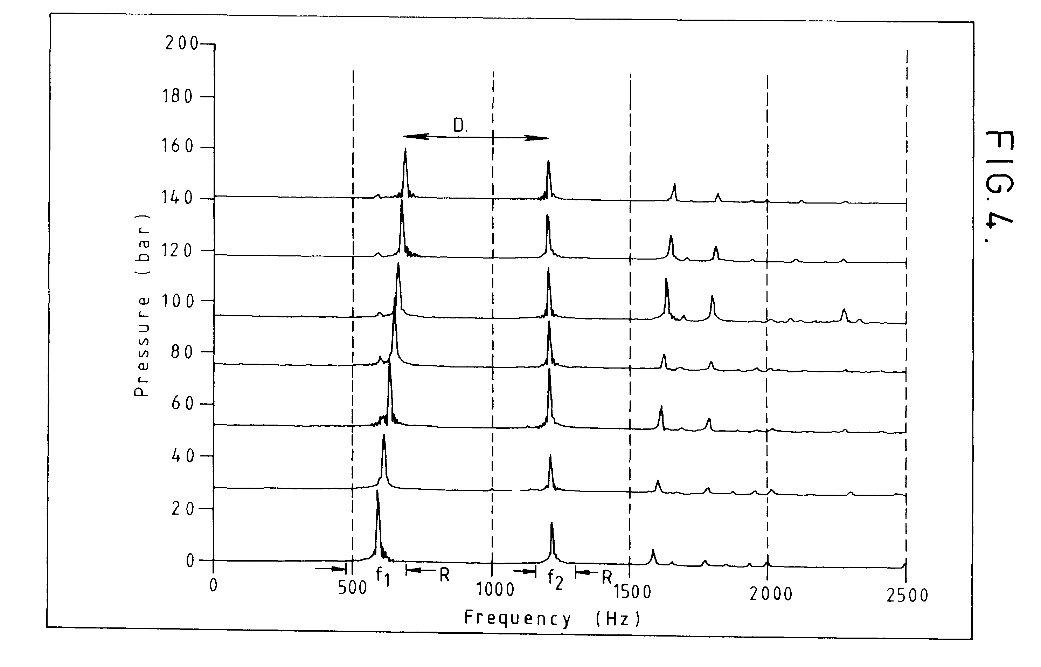

(a) estimating the value $f_1$(est) and then searching for the real value of $f_1$ within a given range R of said estimated value (see Fig 4) $f_1$(est) being established by the following steps (step F):

(i) selecting a nominal value of bottle thickness $t_0$ from stored or manually input data.

(ii) calculating a nominal value $A_0$ from, for example

$$A_0 = C_1 x 0.49 \sqrt{\left(\frac{Et_0^2}{\rho d^4}\right)}$$

(iii) estimating $f_1$(est) from

$$f_1(\text{est}) = A + Bp$$

where Bp is given a value of zero.

(b) estimating the value $f_2(\text{est})$ and then searching for the real value of $f_2$ within a given range of said estimated value (see Fig 4);

$f_2(\text{est})$ being established from, for example,

$$f_2(\text{est}) = 2.8 \times A_0 - f_1 \quad (\text{step G})$$

Upon identification of the real values of $f_1$ and $f_2$ (step H) the real value of A may be calculated from, for example,

$$A = (f_2 - f_1)/2.8$$

The bottle wall thickness t may then be calculated from, for example;

$$A = C_1 \times 0.49 \sqrt{\left(\frac{Et^2}{\rho d^4}\right)}$$

After calculation of the wall thickness t, the variable B may be calculated from, for example;

$$B = C_2 \times \frac{0.05d}{t^2} \sqrt{\left(\frac{1}{\rho E}\right)}$$

and then the pressure P within the container may be calculated from

$$P = (f_1 - A)/B \quad (\text{step I})$$

The results of the calculations may be presented to the operator (step J) via hand held DA Unit 12 or via a computer printout (not shown).

## Claims

1. A non-invasive method of determining the pressure within a sealed, substantially cylindrical container wherein the method comprises the steps of:

(a) inputting data relating to the container into a memory;

(b) striking the container towards the mid portion of the cylindrical container in a controlled manner so as to excite the fundamental radial-circumferential mode of vibration $f_1$ and the first harmonic thereof $f_2$;

(c) detecting the vibration resulting from the striking of said container;

(d) producing a frequency spectrum of the detected vibration;

(e) isolating the frequency of the fundamental mode $f_1$ and the first harmonic $f_2$ from the frequency spectrum;

(f) calculating the value of variable A from the following equation

$$A = (f_2 - f_1)/2.8;$$

characterised in that the method further comprises the steps of:

(g) calculating the thickness t of the container from the following equation

$$A = C_1 x 0.49 \sqrt{\left(\frac{Et^2}{\rho d^4}\right)} \ ;$$

(h) calculating the value of variable B from the following equation

$$B = C_2 x \frac{0.05d}{t^2} \sqrt{\left(\frac{1}{\rho E}\right)} \ ;$$

and then

(i) calculating the pressure P within the container from equation

$$P = (f_1 - A)/B$$

in which,

t = the thickness of the container wall
d = the diameter of the container
E = the Elastic Modulus of the container
r = the density of the container material
$C_1$ and $C_2$ are correction factors to correct for the effect the ends of the container has on the calculation .

2. A method as claimed in Claim 1 characterised in that $f_1$ and/or $f_2$ are isolated by searching within a pre-determined frequency range or ranges.

3. A method as claimed in Claim 1 characterised in that $f_1$ is isolated by first estimating a value $f_1$(est) and then searching for the real value of $f_1$ within a given range of said estimated value, $f_1$(est) being established by the following steps:

(a) selecting a nominal value of thickness $t_0$;

(b) calculating a nominal value $A_0$ from

$$A_0 = C_1 x 0.49 \sqrt{\left(\frac{Et_0^2}{\rho d^4}\right)} \ ;$$

(c) estimating $f_1$(est) from

$$f_1(est) = A + Bp,$$

where Bp is given a value of zero

4. A method as claimed in Claim 1 or Claim 2 characterised in that $f_2$ is isolated by first estimating a value $f_2$(est) and then searching for the real value of $f_2$ within a given range of said estimated value, $f_2$(est) being established from

$$f_2(est) = 2.8 \times A_0 - f_1,$$

where $A_0$ is the nominal value of A calculated in accordance with Claim 3 and $f_1$ is the actual value of the fundamental radial-circumferential mode of vibration.

5. An apparatus (10) for the non-invasive determination of pressure within a sealed, substantially cylindrical container in accordance with the method of claim 1, said apparatus comprising:

   (a) means (12) for receiving basic information relating to the container;

   (b) striking means (14) for striking the mid point of the container in a controlled manner so as to excite the fundamental radial-circumferential mode of vibration $f_1$ and the first harmonic thereof $f_2$;

   (c) detecting means (22) for detecting vibration resulting from the striking of said container;

   (d) isolating means (12c) for isolating the values of $f_1$ and $f_2$; and

   (e) calculating means (12c) for calculating the internal pressure P from the isolated values of $f_1$ and $f_2$ and the container information;

   characterised in that the calculating means (12c) calculates the values of A, t, B and P from the following equations:

$$A = (f_2 - f_1)/2.8$$

$$A = C_1 x 0.49 \sqrt{\left( \frac{E t^2}{\rho d^4} \right)}$$

$$B = C_2 x \frac{0.05d}{t^2} \sqrt{\left( \frac{1}{\rho E} \right)}$$

$$P = (f_1 - A)/B,$$

where

   A and B are correction factors
   t = the thickness of the container wall
   d = the diameter of the container
   E = the Elastic Modulus of the container
   r = the density of the container material

$C_1$ and $C_2$ are correction factors to correct for the effect the ends of the container has on the calculation.

6. An apparatus as claimed in Claim 5 further characterised by a support member (16) on which said striking means (14) is mounted and securing means (18) for securing said support member to said container.

7. An apparatus as claimed in Claim 6 characterised in that said support member (16) comprises an elongate member sized for enabling its insertion between closely packed cylindrical containers (20).

8. An apparatus as claimed in of Claims 6 or 7 characterised in that said securing means (18) comprises a pair of magnets which in operation act to magnetically clamp the support member to said container (20).

9. An apparatus as claimed in any one of Claims 5 to 8 characterised in that said striking means (14) comprises a solenoid having a striking member (14a) which in operation is held away from the surface of the container (20) to be struck and released for striking said container (20) when it is desired to cause vibration thereof.

10. An apparatus as claimed in any one of Claims 5 to 9 characterised in that said detecting means comprises an accelerometer.

**Patentansprüche**

1. Nichteindringendes Verfahren zur Bestimmung des Drucks innerhalb eines abgeschlossenen, im wesentlichen zylindrischen Behälters, wobei das Verfahren die Schritte umfaßt:

   a) Eingeben von den Behälter betreffenden Daten in einen Speicher,

   b) Anschlagen des Behälters gegen den Mittelteil des zylindrischen Behälters in gesteuerter Weise derart, daß die radial-umfangsmäßige Grundschwingung $f_1$ und die erste Harmonische $f_2$ hiervon angeregt werden,

   c) Erfassen der aus dem Anschlagen des Behälters resultierenden Schwingung,

   d) Erzeugen eines Frequenzspektrums der erfaßten Schwingung,

   e) Isolieren der Frequenz der Grundschwingung $f_1$ und der ersten Harmonischen $f_2$ aus dem Frequenzspektrum,

   f) Berechnen des Werts der Variablen A aus der folgenden Gleichung

$$A = (f_2 - f_1)/2{,}8$$

dadurch gekennzeichnet, daß das Verfahren weiter die Schritte aufweist

   g) Berechnen der Dicke t des Behälters aus der folgenden Gleichung

$$A = C_1 \, x \, 0{,}49 \sqrt{\left( \frac{E t^2}{\rho d^4} \right)} \; ;$$

   h) Berechnen des Werts der Variablen B aus der folgenden Gleichung

$$B = C_2 \, x \frac{0,05d}{t^2} \sqrt{\left(\frac{1}{\rho E}\right)} \quad ;$$

und dann

e) Berechnen des Drucks P im Behälter aus der Gleichung

$$P = (f_1 - A)/B$$

worin

t = Dicke der Behälterwand
d = Durchmesser des Behälters
E = Elastizitätsmodul des Behälters
r = Dichte des Behältermaterials
$C_1$ und $C_2$ Korrekturfaktoren zur Korrektur der Wirkungen sind, welche die Enden des Behälters auf die Berechnung haben.

2. Verfahren nach Anspruch 1, dadurch gekennzeichnet, daß $f_1$ und/oder $f_2$ durch Suchen innerhalb eines vorgegebenen Frequenzbereichs bzw. vorgegebener Frequenzbereiche isoliert werden.

3. Verfahren nach Anspruch 1, dadurch gekennzeichnet, daß $f_1$ dadurch isoliert wird, daß zuerst ein Wert $f_1$ (est) geschätzt und dann der wirkliche Wert von $f_1$ innerhalb eines gegebenen Schätzwertbereichs gesucht wird, wobei $f_1$ (est) durch folgende Schritte gebildet wird:

a) Wählen eines Nennwerts der Dicke $t_0$

b) Berechnen eines Nennwerts $A_0$ aus

$$A_0 = C_1 \, x 0.49 \sqrt{\left(\frac{E t_0^2}{\rho \, d^4}\right)} \quad ;$$

c) Schätzen von $f_1$ (est) aus

$$f_1 (est) = A + Bp$$

wobei Bp ein Nullwert gegeben wird.

4. Verfahren nach Anspruch 1 oder 2, dadurch gekennzeichnet, daß $f_2$ isoliert wird, indem zuerst ein Wert $f_2$(est) geschätzt und dann der wirkliche Wert von $f_2$ innerhalb eines gegebenen Schätzwertbereichs gesucht wird, wobei $f_2$ (est) gebildet wird aus

$$f_2(est) = 2,8 \, x \, A_0 - f_1$$

wobei $A_0$ den Nennwert von A ist, der nach Anspruch 3 berechnet ist, und $f_1$ der tatsächliche Wert der radial-umfangsmäßigen Grundschwingung ist.

5. Gerät (10) zur nichteindringenden Bestimmung des Drucks innerhalb eines abgeschlossenen, im wesentlichen zylindrischen Behälters nach dem Verfahren nach Anspruch 1, wobei das Gerät aufweist:

a) Mittel (12) zur Aufnahme von den Behälter betreffenden Basisinformationen,

b) Schlagmittel (14) zum Anschlagen der Behältermitte in gesteuerter Weise, um die radial-umfangsmäßige Grundschwingung $f_1$ und die erste Harmonische $f_2$ hiervon anzuregen,

c) Erfassungsmittel (22) zur Erfassung der aus dem Anschlagen des Behälters resultierenden Schwingung,

d) Bestimmungsmittel (12c) zum Isolieren der Werte $f_1$ und $f_2$, und

e) Berechnungsmittel (12c) zum Berechnen des Innendrucks P aus den isolierten Werten von $f_1$ und $f_2$ und der Behälterinformation,

dadurch gekennzeichnet, daß die Berechnungsmittel (12c) die Werte von A, t, B und P aus den folgenden Gleichungen berechnen:

$$A = (f_2 - f_1)/2.8$$

$$A = C_1 x 0.49 \sqrt{\left(\frac{Et^2}{\rho d^4}\right)}$$

$$B = C_2 x \frac{0.05d}{t^2} \sqrt{\left(\frac{1}{\rho E}\right)}$$

$$P = (f_1 - A)/B,$$

wobei

A und B Korrekturfaktoren sind
t = Dicke der Behälterwand
d = Durchmesser des Behälters
e = Elastizitätsmodul des Behälters
r = Dichte des Behältermaterials
$C_1$ und $C_2$ Korrekturfaktoren zur Korrektur der Wirkungen sind, welche die Enden des Behälters auf die Berechnung haben.

6. Gerät nach Anspruch 5, weiter gekennzeichnet durch ein Tragteil (16), auf welchem die Schlagmittel (14) montiert sind, und durch Befestigungsmittel (18) zum Befestigen des Tragteils am Behälter.

7. Gerät nach Anspruch 6, dadurch gekennzeichnet, daß das Tragteil (16) ein längliches Bauteil aufweist, das so bemessen ist, daß es zwischen dicht gepackten zylindrischen Behältern (20) eingeführt werden kann.

8. Gerät nach Anspruch 6 oder 7, dadurch gekennzeichnet, daß die Befestigungsmittel (18) zwei Magnete aufweisen, die im Betrieb das Tragteil magnetisch an dem Behälter (20) fixieren.

9. Gerät nach einem der Ansprüche 5 bis 8, dadurch gekennzeichnet, daß die Schlagmittel (14) einen Elektromagneten mit einem Schlagteil (14a) aufweisen, der im Betrieb von der Oberfläche des anzuschlagenden Behälters (20) entfernt gehalten und zum Anschlagen des Behälters (20) freigegeben wird, wenn dieser in Schwingung versetzt werden soll.

**10.** Gerät nach einem der Ansprüche 5 bis 9, dadurch gekennzeichnet, daß die Erfassungsmittel einen Beschleunigungsmesser aufweisen.

**Revendications**

**1.** Procédé non invasif pour déterminer la pression à l'intérieur d'un récipient scellé substantiellement cylindrique, dans lequel le procédé comprend les étapes consistant à :

(a) rentrer des données concernant le récipient dans une mémoire ;
(b) percuter le récipient sur le point médian du récipient cylindrique, d'une manière contrôlée. afin d'exciter le mode de vibration radial-circonférentiel fondamental $f_1$ et la première harmonique de celui-ci, $f_2$ ;
(c) détecter la vibration résultant de la percussion dudit récipient ;
(d) produire un spectre de fréquence de la vibration détectée ;
(e) isoler la fréquence du mode fondamental $f_1$ et la première harmonique $f_2$ du spectre de fréquence;
(f) calculer la valeur d'une variable A à partir de l'équation suivante :

$$A = (f_2 - f_1)/2{,}8 ;$$

**caractérisé en ce que** le procédé comprend de plus les étapes consistant à :

(g) calculer l'épaisseur t du récipient à partir de l'équation suivante :

$$A = C_1 x 0{,}49\sqrt{\left(\frac{Et^2}{\rho d^4}\right)} ;$$

(h) calculer la valeur d'une variable B à partir de l'équation suivante :

$$B = C_2 x \frac{0{,}05d}{t^2}\sqrt{\left(\frac{1}{\rho E}\right)}$$

et ensuite
(i) calculer la pression P à l'intérieur du récipient à partir de l'équation

$$P = (f_1 - A)/B$$

dans lesquelles

t = l'épaisseur de la paroi du récipient
d = le diamètre du récipient
E = le Module d'Elasticité du récipient
r = la masse volumique du matériau du récipient
$C_1$ et $C_2$ sont des facteurs de correction pour corriger l'effet que les extrémités du récipient ont sur le calcul.

**2.** Procédé selon la Revendication 1, **caractérisé en ce que** $f_1$ et/ou $f_2$ sont isolées par recherche dans une gamme ou des gammes de fréquence prédéterminées.

**3.** Procédé selon la Revendication 1, **caractérisé en ce que** $f_1$ est isolée d'abord par estimation d'une valeur $f_1$ (est), puis par recherche de la valeur réelle de $f_1$ dans une gamme donnée de ladite valeur estimée, $f_1$ (est) étant établie par les étapes suivantes :

(a) choisir une valeur nominale de l'épaisseur $t_0$ ;

(b) calculer une valeur nominale de $A_0$ à partir de

$$A_0 = C_1 x 0,49 \sqrt{\left(\frac{E t_0^2}{\rho d^4}\right)}$$

(c) estimer $f_1$ (est) à partir de

$$f_1 \text{ (est)} = A + Bp,$$

où Bp reçoit la valeur zéro.

4. Procédé selon la Revendication 1 ou la Revendication 2, **caractérisé en ce que** $f_2$ est isolée d'abord par estimation d'une valeur $f_2$(est), puis par recherche de la valeur réelle de $f_2$ dans une gamme donnée de ladite valeur estimée, $f_2$(est) étant établie à partir de

$$f_2\text{(est)} = 2,8 \times A_0 - f_1,$$

où $A_0$ est la valeur nominale de A calculée en accord avec la Revendication 3 et $f_1$ est la valeur réelle du mode radial-circonférentiel fondamental de vibration.

5. Dispositif (10) pour la détermination non invasive de la pression à l'intérieur d'un récipient scellé substantiellement cylindrique en accord avec le procédé de la Revendication 1, ledit dispositif comprenant :

(a) des moyens (12) pour recevoir des informations initiales concernant le récipient ;

(b) des moyens de percussion (14) pour percuter le point médian du récipient cylindrique. d'une manière contrôlée, afin d'exciter le mode de vibration radial-circonférentiel fondamental $f_1$ et la première harmonique de celui-ci, $f_2$ ;

(c) des moyens de détection (22) pour détecter la vibration résultant de la percussion dudit récipient;

(d) des moyens d'isolation (12c) pour isoler les valeurs de $f_1$ et $f_2$ ; et

(e) des moyens de calcul (12c) pour calculer la pression interne P à partir des valeurs isolées de $f_1$ et $f_2$ et des informations sur le récipient ;

**caractérisé en ce que** les moyens de calcul (12c) calculent les valeurs de A, t, B et P à partir des équations suivantes :

$$A = (f_2 - f_1)/2,8 \text{ ;}$$

$$A = C_1 x 0,49 \sqrt{\left(\frac{E t^2}{\rho d^4}\right)} \text{ ;}$$

$$B = C_2 x \frac{0,05d}{t^2} \sqrt{\left(\frac{1}{\rho E}\right)}$$

$$P = (f_1 - A)/B$$

où

A et B sont des facteurs de correction
t = l'épaisseur de la paroi du récipient
d = le diamètre du récipient
E = le Module d'Elasticité du récipient
r = la masse volumique du matériau du récipient
$C_1$ et $C_2$ sont des facteurs de correction pour corriger l'effet que les extrémités du récipient ont sur le calcul.

6. Dispositif selon la Revendication 5, **caractérisé de plus par** un élément de support (16) sur lequel sont montés lesdits moyens de percussion (14) et des moyens de fixation (18) pour fixer ledit élément de fixation audit récipient.

7. Dispositif selon la Revendication 6, **caractérisé en ce que** ledit élément de support (16) comprend un élément allongé d'une taille adaptée pour permettre son insertion entre des récipients cylindriques (20) étroitement serrés.

8. Dispositif selon l'une des Revendications 6 ou 7, **caractérisé en ce que** lesdits moyens de fixation (18) comprennent une paire d'aimants qui, en fonctionnement, servent à fixer magnétiquement l'élément de support sur ledit récipient (20).

9. Dispositif selon l'une quelconque des Revendications 5 à 8, **caractérisé en ce que** lesdits moyens de percussion (14) comprennent un électro-aimant ayant un élément percuteur (14a) qui, en fonctionnement, est maintenu éloigné de la surface du récipient (20) à percuter, puis relâché pour percuter ledit récipient (20) lorsqu'on désire provoquer la vibration de ce dernier.

10. Dispositif selon l'une quelconque des Revendications 5 à 9, **caractérisé en ce que** lesdits moyens de détection comprennent un accéléromètre.

FIG. 1.

FIG. 2.

Bottle G2-empty

FIG. 3.

# FIG.4.

# FIG.5.